(19) Europäisches Patentamt
European Patent Office
Office européen des brevets

(11) **EP 2 120 232 A1**

(12) **EUROPEAN PATENT APPLICATION**
published in accordance with Art. 153(4) EPC

(43) Date of publication:
**18.11.2009 Bulletin 2009/47**

(21) Application number: **07871767.5**

(22) Date of filing: **06.12.2007**

(51) Int Cl.:
*G10L 17/00* (2006.01)   *H04L 9/32* (2006.01)
*G06F 21/00* (2006.01)   *G07F 7/10* (2006.01)

(86) International application number:
**PCT/CN2007/071200**

(87) International publication number:
**WO 2008/083571 (17.07.2008 Gazette 2008/29)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.12.2006 CN 200610161138**

(71) Applicant: **Top Digital Co., Ltd.**
**Hsichih City**
**Taipei Hsien**
**Taiwan (CN)**

(72) Inventors:
• **YU, Kun-Lang**
  **Taiwan (CN)**
• **OUYANG, Yen-Chieh**
  **Taiwan (CN)**

(74) Representative: **Schwerbrock, Florian**
**Danziger Straße 35a**
**20099 Hamburg (DE)**

(54) **A RANDOM VOICE PRINT CIPHER CERTIFICATION SYSTEM, RANDOM VOICE PRINT CIPHER LOCK AND GENERATING METHOD THEREOF**

(57)     A random voice print certification system includes a training system, a random cipher generator, and a testing system, for training or testing original input speech data. At training speech, the training system obtains an appointment voice print feature model parameter groups from the original input speech data, and a plurality of voice print feature units are obtained from the appointment voice print feature model parameter groups, and the voice print feature units are combined to form at least one reference voice print cipher group, for performing speech testing task in testing system. At performing testing speech, the random cipher generator randomly generates at least one reference voice print cipher group from the voice print feature units of the appointment voice print feature model parameter groups, to form a random voice print cipher lock.

FIG. 2

## EP 2 120 232 A1

**Description**

BACKGROUND OF THE INVENTION

1. Field of the Invention

The present invention relates to a random voiceprint certification system, random voiceprint cipher lock and creating method therefor. Particularly, the present invention relates to a random voiceprint certification system forming one or several reference voiceprint passwords by the random combination of a plurality of voiceprint characteristic units, selecting one or several reference voiceprint passwords to build a random voiceprint cipher lock, and accordingly processing a voiceprint verification operation, and a voiceprint lock and creating method provided by the random voiceprint certification system.

2. Description of the Related Art

Currently, biological features (i.e. unique physical traits) have been gradually and widely used in personal verification. A bunch of technologies using biological features for personal verification include face recognition, fingerprint recognition, palm print recognition, voiceprint recognition, iris recognition and DNA fingerprint recognition etc.

Many approaches to security of personal electronic data have long been developed. For instance, a secret code or a password is traditionally used to secure personal electronic data, bank business transactions, and security system but it cannot effectively protect personal electronic data because of leakage of secret code or on-line invasion by hackers. Hence, there is a need for seeking out other effective measures for security of the personal electronic data, bank business transactions, and security system. In consideration of practical use and cost for biometrics, it is found that voiceprint recognition is suitably going to the main stream of personal verification.

Taiwan Patent Publication No. 490655 discloses a recognition method and a device therefor verifying a user by information of voice spectrum. The recognition method uses unique information of voice spectrum to verify a person's identity in such a way to confirm authorization of the user. This method comprises (1) detecting the end point of the voice from a user; (2) retrieving features from a spectrum of the voice; (3) deciding whether training is required, if yes, using the features as a reference sample and setting a boundary, if no, carrying out the next procedure; (4) carrying out pattern comparison between the features and the reference sample; (5) calculating the distance of the gap between the features and the reference sample based on the calculation result; (6) comparing the calculation result with the boundary; (7) discriminating whether the user is authorized based on the comparison result.

This method is used in mobile phones or computer related products and can extract the unique feature of the voice by voice spectrum analysis for identifying the user. The primary value of each frame is compared with the boundary set by the user to decide the starting point and end point of the voice. A Princen-Bradley filter is then used to convert the detected voice signals to retrieve corresponding voice spectrum patterns which are compared with reference voice spectrum samples stored previously, thereby identifying the voiceprint of the user.

Briefly, the identification method disclosed in TWN490655 must calculate degrees of matches and distances of gaps for the patterns of sound spectrums. A user can pass the random voiceprint certification system if the calculated distance of gaps does not exceed in the boundaries. However, there is a need for calculating distances between the reference specimens and the test specimens when the identification method calculates degrees of matches and distances of gaps for the patterns of sound spectrums. Besides, there is only one reference sample used by this system so that it is easy for illegal invasion such as proceeding by playing an illegal pre-record voiceprint data.

Therefore, TWN490655 needs further improvement to solve a problem caused by the said single reference sample so the random voiceprint certification system can avoid illegal invasion and enhance security of the random voiceprint certification system.

For improvement, the present invention provides a random voiceprint certification system employing a plurality of voiceprint characteristic units being randomly combined to form one or several reference voiceprint passwords, selecting one or several of the reference voiceprint passwords to set up a random voiceprint cipher lock, and accordingly processing a voiceprint verification operation. As a result, a security model for the voiceprint verification operation is provided.

SUMMARY OF THE INVENTION

The primary objective of the present invention is to provide a random voiceprint certification system, random voiceprint cipher lock and creating method therefor. By the random combination of several voiceprint characteristic units, at least one reference voiceprint password is formed. By the reference voiceprint passwords to build the voiceprint lock, the random voiceprint certification system operation can be carried out and the reliability of the random voiceprint certification system can be improved.

The secondary objective of the present invention is to provide the random voiceprint certification system, the random voiceprint cipher lock and creating method therefor. By the random combination of several voiceprint characteristic units, several reference voiceprint passwords are formed. By the several reference voiceprint passwords to build the voiceprint lock, the random voiceprint certification system operation can be carried out and the reliability of the random voiceprint certification system can be improved.

According to the present invention of the random voiceprint certification system comprises a training system, a random cipher generator, and a testing system. The input raw voice data can be dealt in the training or testing operation. In the training voice, the training system obtains an appointment voiceprint feature model parameter groups from input raw voice data. A plurality of voiceprint characteristic units can be obtained from the appointment voiceprint feature model parameter groups. By combining one or several voiceprint characteristic units, at least one reference voiceprint password can be obtained to provide the testing system processing the voice testing operation. In voice testing operation, the random cipher generator generates randomly at least one reference voiceprint password from the appointment voiceprint feature model parameter groups of the voiceprint characteristic units to build the random voiceprint cipher lock. In the decrypting operation, the testing voice data is relative to the reference voiceprint passwords for the requirement of the testing system so that the voice testing operation can be completed.

The random voiceprint certification system further comprises a front-end processing portion, and a feature-retrieving portion. In the training voice operation, the training system retrieved the effective voice data by the front-end processing portion on the input raw voice data. The feature-retrieving portion retrieves features from the effective voice data. The calculation is carried out on the effective voice data to get the most similar path as the appointment voiceprint feature model parameter groups. In the testing voice operation, the testing system retrieved the effective voice data by the front-end processing portion on the input raw voice data. The feature-retrieving portion retrieves features from the effective voice data. The calculation is carried out for the similar probability between the testing voice feature and the model parameter to output a verification result.

According to the present invention of the random voiceprint cipher lock comprises a plurality of the voiceprint characteristic units. By the random combination of voiceprint characteristic units, one or several reference voiceprint passwords are built. By one or several reference voiceprint passwords, the random voiceprint cipher lock is set up. In the decrypting operation, the testing voice data required by the random voiceprint cipher lock is relative to the reference voiceprint passwords so that the voice testing operation can be completed.

The procedures of the random voiceprint cipher lock and creating method therefor of the present invention includes input an input raw voice data; the appointment voiceprint feature model parameter groups can be obtained from the input raw voice data. From the appointment voiceprint feature model parameter groups, the several voiceprint characteristic units are obtained. By one or the several voiceprint characteristic units to built at least one reference voiceprint password, the random voiceprint cipher lock is provided.

Further scope of the applicability of the present invention will become apparent from the detailed description given hereinafter. However, it should be understood that the detailed description and specific examples, while indicating preferred embodiments of the invention, are given by way of illustration only, since various will become apparent to those skilled in the art from this detailed description.

BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Fig. 1 is a flowchart of the random voiceprint cipher lock and creating method therefor in accordance with the present invention;

Fig. 2 is a processing block diagram of the random voiceprint certification system in accordance with the present invention;

Fig. 3A is a processing block diagram of the random voiceprint certification system carrying out the voice training operation in accordance with the present invention;

Fig. 3B is a processing block diagram of the random voiceprint certification system carrying out the voice training operation in accordance with the present invention;

Fig. 4A is a relationship diagram illustrating the energy and the frames of the random voiceprint certification system employing short-time energy and zero-crossing rate carrying out endpoint detection in accordance with the present invention;

Fig. 4B is a partial magnification diagram in accordance with the present invention;

Fig. 5A is a relationship diagram illustrating the energy and the frames of the random voiceprint certification system employing the entropy-based algorithm carrying out endpoint testing in accordance with the present invention;

Fig. 5B is a partial magnification diagram in accordance with the present invention;

Fig. 6A is a schematic diagram illustrating the energy timing order of inputting ten voices of the random voiceprint certification system in accordance with the present invention;

Fig. 6B is a relationship diagram illustrating the energy and the frames of the random voiceprint certification system employing the entropy-based algorithm carrying out endpoint detection according to Fig. 6A shown input voice in accordance with the present invention;

Fig. 6C is a frames matrix diagram of the random voiceprint certification system employing Fig. 6B shown by endpoint detection to decide selection of the frames in accordance with the present invention;

Fig. 7 is a schematic diagram illustrating the energy timing order of the random voiceprint certification system by after the completion of cutting point operation, the recombination is carried out or not in accordance with the present invention;

Fig. 8 is a relationship diagram illustrating the status and the frames of the random voiceprint certification system in accordance with the present invention;

Fig. 9 is a schematic diagram illustrating initial distribution models of the status and the frames of the random voiceprint certification system in accordance with the present invention;

Fig. 10 is a schematic diagram illustrating status conversion of the random voiceprint certification system in accordance with the present invention;

Fig. 11 is a schematic diagram illustrating a most similar path of the random voiceprint certification system in accordance with the present invention;

Fig. 12 is a schematic diagram illustrating the equal distinction of the frames of the random voiceprint certification system in accordance with the present invention;

Fig. 13 is a schematic diagram illustrating a first redistribution of the frames of the random voiceprint certification system in accordance with the present invention;

Fig. 14 is a schematic diagram illustrating a second redistribution of the frames of the random voiceprint certification system in accordance with the present invention;

Fig. 15 is a schematic diagram illustrating an optimal distribution of the frames of the random voiceprint certification system in accordance with the present invention;

Fig. 16 is a schematic diagram illustrating the random cipher generator generating randomly the reference voiceprint passwords of the random voiceprint certification system in accordance with the present invention;

## DETAILED DESCRIPTION OF THE INVENTION

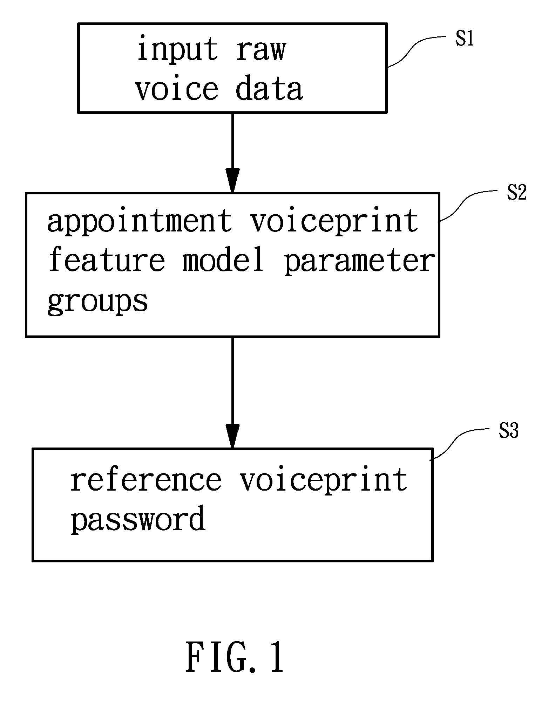

Referring to FIG. 1, a random voiceprint cipher lock and creating method thereof in accordance with the present invention comprises three main procedures to build the random voiceprint cipher lock. Furthermore, in general application, the random voiceprint cipher lock and creating method thereof can be applied on the personal electronic data, bank business transactions, and security system of personal recognition.

Still referring to FIG. 1, the said three main procedures for the random voiceprint cipher lock and of the creating method includes: a procedure of obtaining input raw voice data S1, a procedure of generating appointment voiceprint feature model parameter groups S2, and a procedure of generating the random voiceprint cipher lock S3.

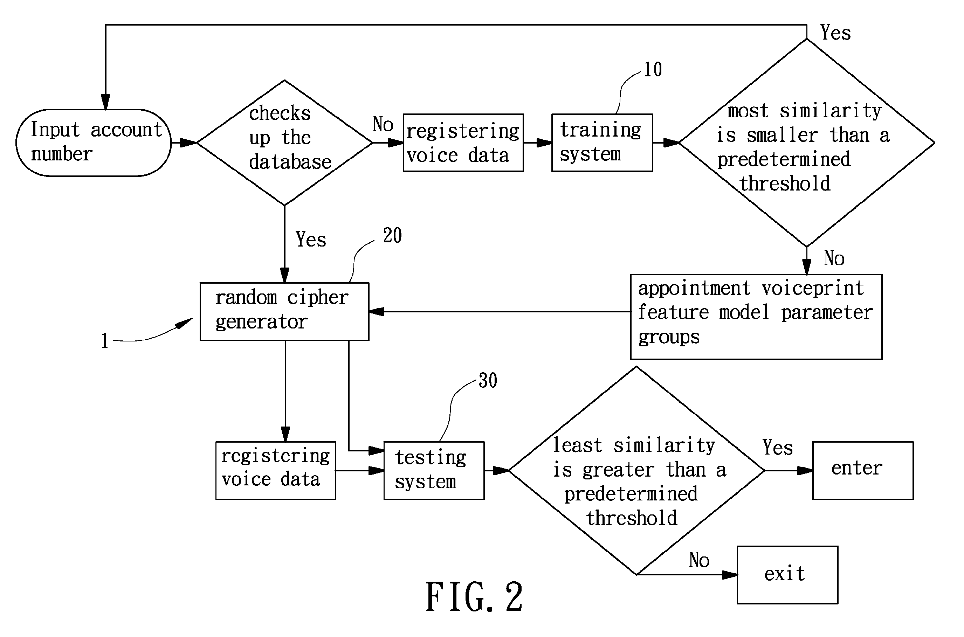

Referring to FIG 2, the random voiceprint certification system in accordance with the present invention comprises a training system 10, a random cipher generator 20, and a testing system 30. Therefore, a training or testing operation can be carried out for the input raw voice data.

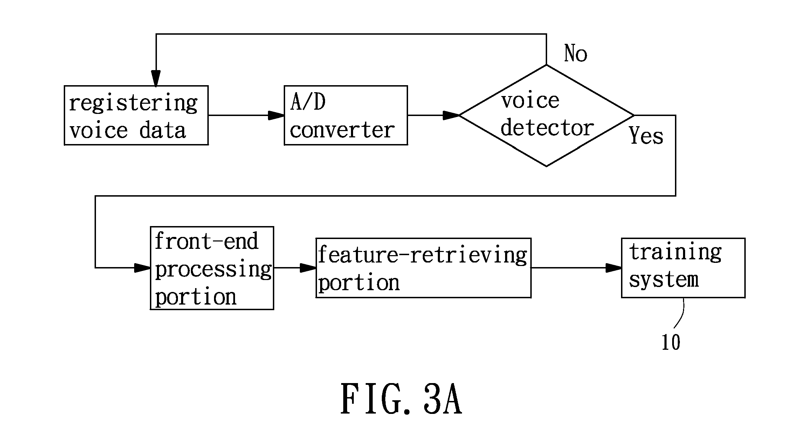

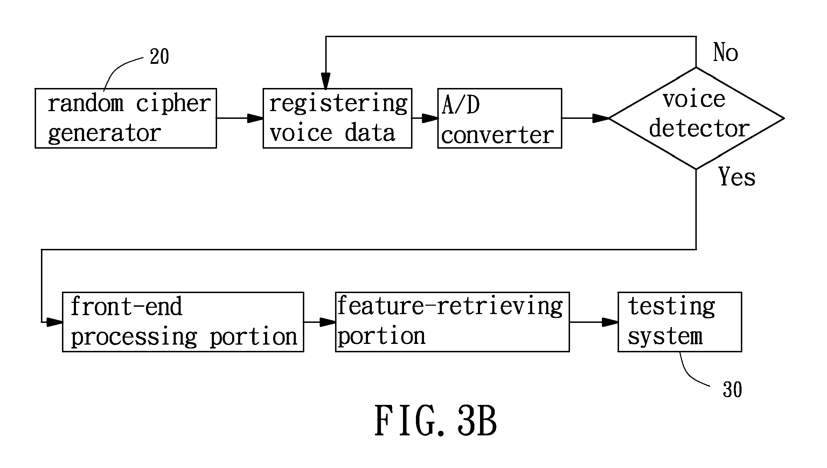

Referring to FIG 1, 3A, and 3B, the random voiceprint certification system in accordance with the present invention further comprises: an A/D converter, a voice detector, a front-end processing portion, and a feature-retrieving portion, which are employed to carry out the voice training operation and the voice testing operation. The most important procedure of the voice training operation and the voice testing operation of the present invention is to search position of the voice signal from the input raw voice data, that is, to identify the starting point and terminal point of the voice signal. The better searching method for correct position of the starting point and the terminal point is "endpoint detection", which includes algorithm based on short-time energy and zero-crossing rate, and entropy-based algorithm. By the algorithm based on both short-time energy and zero-crossing rate, the endpoint detection is firstly carried out in accordance with the energy of the input raw voice data. Additionally, in accordance with the energy of the input raw voice data still, the endpoint detection can be further processed by the entropy-based algorithm. Furthermore, by a cutting operation, the silence and the noise of the input raw voice data can be removed. Finally, After completing the cutting operation, the cut input raw voice data further go through compression and arrangement to obtain the effective voice data.

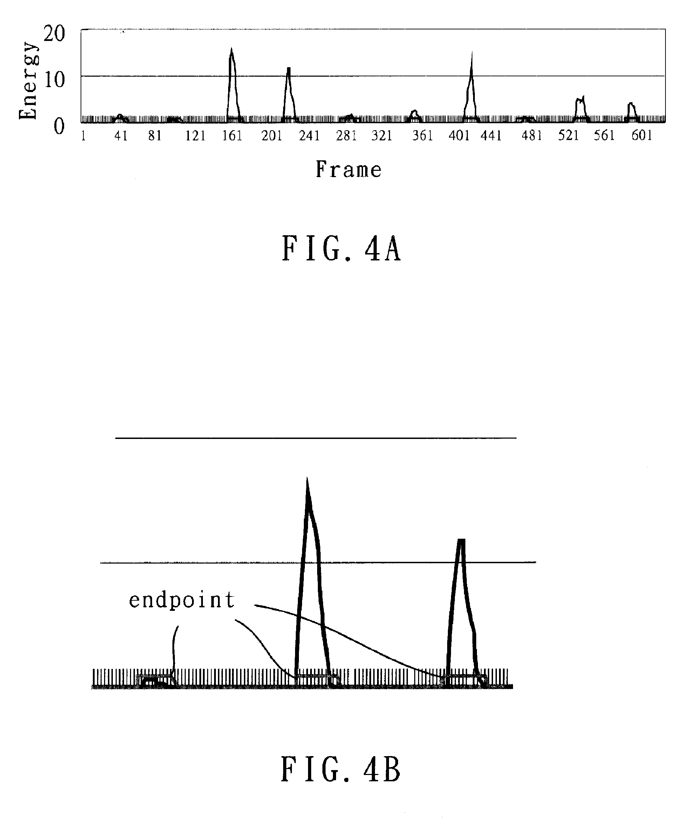

Referring to FIG 4A and 4B, in accordance with the energy of the input raw voice data, a result of the endpoint detection completed by the algorithm based on both short-time energy and zero-crossing rate shown by a relationship chart of energy vs. frame is illustrated. From the relationship chart of energy vs. frame, several endpoints can be determined. Finally, the random voiceprint certification system can determine each starting point and each terminal point of the input raw voice data.

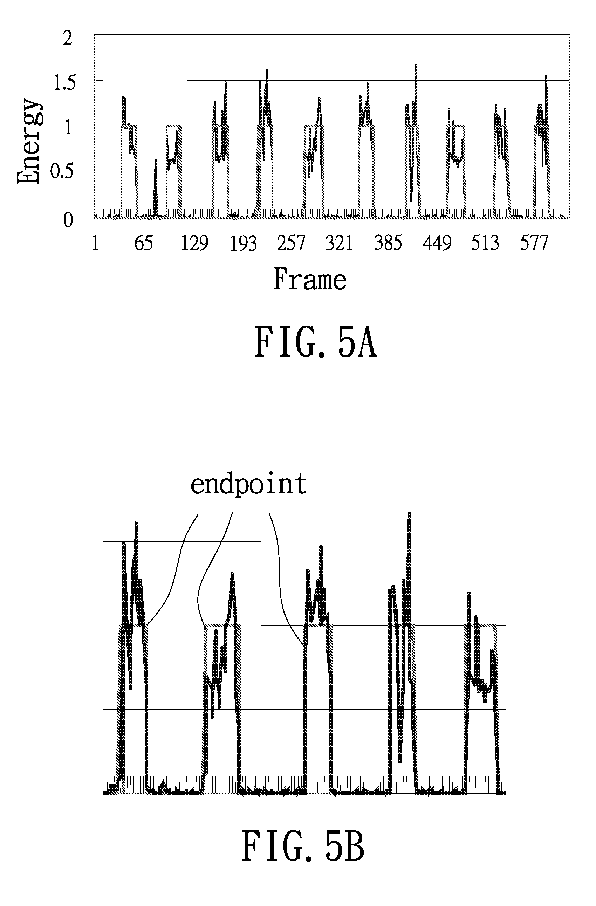

Referring to FIG. 5A and 5B, by the entropy-based algorithm, in accordance with the energy of the input raw voice data, another result of the endpoint detection can be carried out and shown. From the relationship chart of energy vs. frame, several endpoints can be obtained. Finally, the random voiceprint certification system can also determine each starting point and each terminal point of the input raw voice data through the entropy-based algorithm.

Referring to FIG 4B and 5B again, the random voiceprint certification system of the present invention, the above-mentioned endpoint detection can avoid false rejection and false acceptance and thus provide the random voiceprint certification system with good performance in recognition. Briefly, on one hand, the random voiceprint certification system of the present invention can prevent the effective voice data from being determined as silence or noise, so as to avoid false rejection; on the other hand, it can also prevent silence and noise from being determined as the effective voice data, so as to avoid false acceptance.

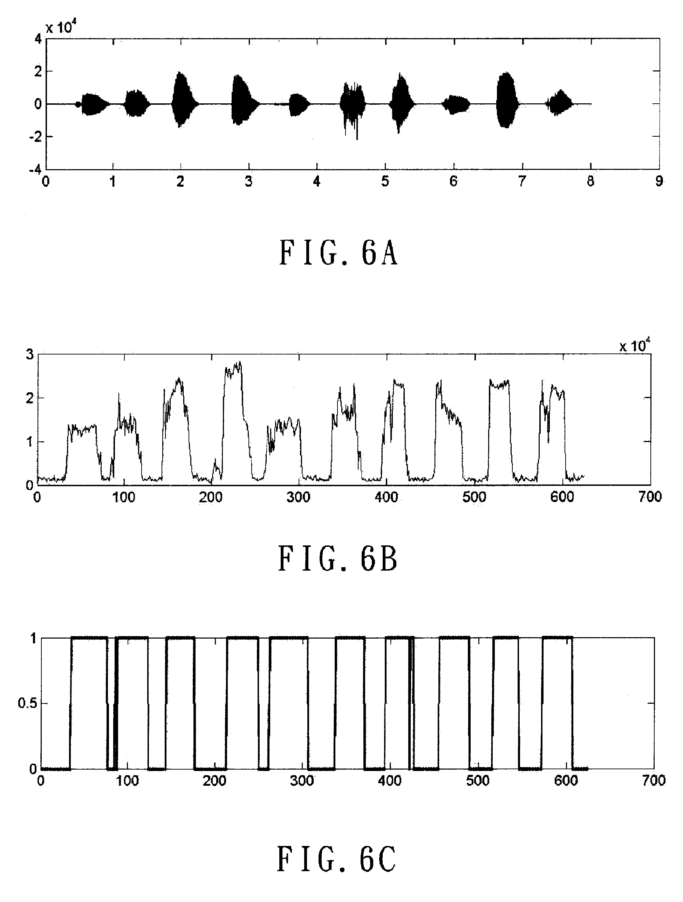

Referring to FIG. 6A, an example shows how to process the operation of the endpoint detection by sequentially pronouncing numbers 0 to 9 as the input raw voice data and inputting the input raw voice data into the random voiceprint certification system of the present invention.

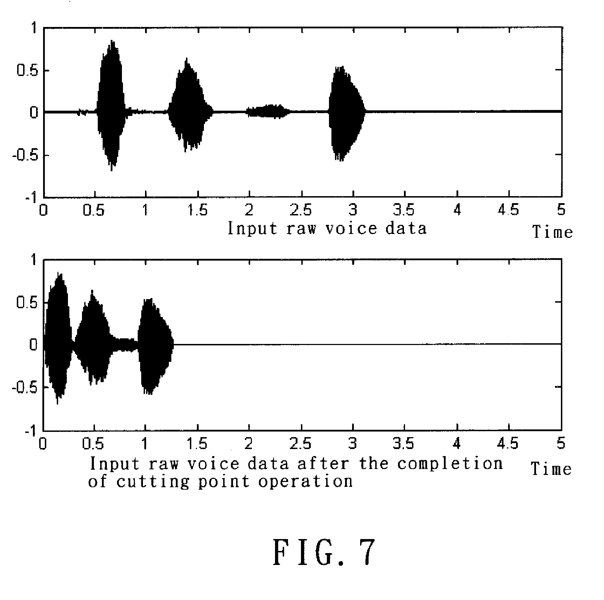

Referring to FIG. 6A and 6B, from the said input raw voice data, that is, sounds of those pronounced numbers "0, 1, 2, 3, 4, 5, 6, 7, 8, and 9," ten voice signals can be obtained, with each voice signal presenting a sound of one of the pronounced numbers and having a starting point and a terminal point. Referring to FIG. 6A to 6C, from each voice signal between the starting point and the terminal point thereof, ten frames, which respectively represent the voice signals, can be decided. The operation of the cutting points and a recombination can be processed after determining these frames. Referring to FIG. 7, after completing the operation of the cutting points, a feature value can be obtained from each frame. Following, according to the feature values, the operation of the recombination of the frames can be carried out. Finally, with the feature values completing the recombination, the random voiceprint certification system can carry out the voiceprint recognition.

Referring to FIG. 2 again, when a user logins the random voiceprint certification system 1 in accordance with the present invention, an account number is requested for verifying the user. The random voiceprint certification system 1 checks up the database whether the input account number has been registered. If the account number has not been registered, the procedure is automatically moved to the training system 10 for training and registering voice data for a new account number. But, if the account number has been registered, the procedure is automatically moved to the testing system 30 for verifying whether the features of the input voice match those stored in the account number. At this time, the random cipher generator 20 can randomly generate one or several reference voiceprint passwords, and thus the random voiceprint certification system 1 is completely set up to form the random voiceprint cipher lock for the testing system 30 to process the voice testing operation.

Referring to FIG 1 and FIG 3A again, in order to completely set up the random voiceprint cipher lock, a creating method therefor is provided, which preliminary processes the front part of the voice training operation to carry out a step of obtaining the input raw voice data, designated as "S1". Therefore, users can directly input voice to a voice detector and then can complete the step S1 for obtaining the input raw voice data. Referring to FIG. 3A, after complete the step S1 for obtaining the input raw voice data, the input raw voice data can be employed for the next step.

Referring to FIG. 1 and FIG 3A again, following, the random voiceprint cipher lock and creating method therefor carry out the a step of generating the appointment voiceprint feature model parameter groups, designated as "S2". After processing the step S2 for generating the appointment voiceprint feature model parameter groups, the appointment voiceprint feature model parameter groups will be stored in the random voiceprint certification system 1. After completing the step S2, the appointment voiceprint feature model parameter groups can be further employed for the next step.

Referring to FIG. 2 and FIG 3A again, for processing the voice training operation, the input raw voice data provided by a user for the random voiceprint certification system 1 need to be corresponding to a specific voice sequence, such as the pronunciations of "0, 1, 2, 3, 4, 5, 6, 7, 8, 9, A, B, C, D, E, F, G, H, I, J, K..." etc. Therefore, the training system 10 can generate the appointment voiceprint feature model parameter groups including a plurality of the voiceprint characteristic units. For example, the voiceprint characteristic units relate with 0, 1, 2, 3, 4, 5, 6, 7, 8, 9, A, B, C, D, E, F, G, H, I, J, K... etc. one by one. In order to carry out the voice testing operation, the random cipher generator 20 of the random voiceprint certification system 1 randomly generates at least one reference voiceprint password. Next, according to the at least one reference voiceprint password, which is selected by the random cipher generator 20, the voice testing operation can be carried out.

Referring to FIG. 3 again, before retrieving the features of voice, the front-end processing portion retrieves the effective voice data from the input raw voice data and filters non-effective voice data. The short-time energy and zero-crossing rate are employed in the present invention for the endpoint detection. For example, in the present invention, a calculating method combining Gauss possibility distribution is employed, and the equation is as follows:

$$b_i(\vec{x}) = \frac{1}{(2\pi)^{D/2}|\Sigma_i|^{1/2}}\exp\left\{-\frac{1}{2}(\vec{x}-\vec{u_i})'\Sigma_i^{-1}(\vec{x}-\vec{u_i})\right\} \tag{1}$$

wherein $\vec{x}$ is the original signal that is divided into a plurality of frames in D-dimension, $b_i(\vec{x})$ is the possibility while i = 1, ..., M, $\vec{u_i}$ is the expectation value of the background noise signal, and $\Sigma_i$ is the variance of the background noise signal. Since D in $\dfrac{1}{(2\pi)^{D/2}}$ is certain (D=256 in this case), it is neglected, and equation (1) is simplified as follows:

$$b_i(\vec{x}) = \frac{1}{|\Sigma_i|^{1/2}}\exp\left\{-\frac{1}{2}(\vec{x}-\vec{u_i})'\Sigma_i^{-1}(\vec{x}-\vec{u_i})\right\} \tag{2}$$

The exponential calculation may be too large. The equation (2) is simplified and rewritten into equation (3) after obtaining its logarithm.

$$b_i(\vec{x}) = \ln\left(\frac{1}{|\Sigma_i|^{1/2}}\exp\left\{-\frac{1}{2}(\vec{x}-\vec{u_i})'\Sigma_i^{-1}(\vec{x}-\vec{u_i})\right\}\right)$$

$$= \ln\frac{1}{|\Sigma_i|^{1/2}} - \frac{1}{2}(\vec{x}-\vec{u_i})'\Sigma_i^{-1}(\vec{x}-\vec{u_i})$$

$$b_i(\vec{x}) = \left(-\frac{1}{2}\right)\ln|\Sigma_i| - \frac{1}{2}(\vec{x}-\vec{u_i})'\Sigma_i^{-1}(\vec{x}-\vec{u_i}) \tag{3}$$

The first 256 points of the front portion of the raw voice data are extracted to calculate the expectation value, variance of the short-time energy and zero-crossing rate. The two values and the raw voice data are substituted into equation (3) for calculation purposes. Since the distributive possibility area of the short-time energy and zero-crossing rate includes the effective voice data and the non-effective voice data, the non-effective voice data can be removed to reduce the amount of data while allowing correct retrieval of the effective voice data.

In addition, for example, when the feature-retrieving portion retrieves voice features from the input voice data, there are two parameters used in the present invention for verifying voice features. The parameters include linear prediction cepstrum coefficient (LPCC) and Mel frequency cepstrum coefficient (MFCC). Each of the parameters includes twelve cepstral coefficients and twelve delta-cepstral coefficients. Equation (4) is obtained after carrying out partial differentiation on the cepstral coefficients with respect to time:

$$\Delta c_n(t) = \frac{\partial c_n(t)}{\partial t} = \frac{\displaystyle\sum_{k=-K}^{K} k c_n(t+k)}{\displaystyle\sum_{k=-K}^{K} k^2} \tag{4}$$

wherein K is the number of considered frames.

The equation (4) is too complicated and thus simplified to merely consider two anterior frames and two posterior frames, obtaining the following equations (5)-(9):

$$\Delta C_n^0 = [2*C(2,n) + C(1,n)]/5 \qquad (5)$$

$$\Delta C_n^1 = [2*C(3,n) + C(2,n) - C(0,n)]/6 \qquad (6)$$

$$\Delta C_n^i = [2*C(i+2,n) + C(i+1,n) - C(i-1,n) - 2*C(i-2,n)]/10 \qquad (7)$$

$$\Delta C_n^{L-2} = [C(L-1,n) - C(L-3,n) - 2*C(L-4,n)]/6 \qquad (8)$$

$$\Delta C_n^{L-1} = [-C(L-2,n) - 2*C(L-3,n)]/5 \qquad (9)$$

wherein Cn is the feature value in n-th order, L is the total number of the frames in the signal, and i is the serial number of the frames.

FIG. 4 is a schematic diagram illustrating relationship between statuses and frames of the random voiceprint certification system in accordance with the present invention.

In processing training operation, the term "status" means the change in the mouth shape and the vocal band. Generally, a speaker's mouth has changes in shape while speaking. Thus, each status is the feature of the change of the voice. In some cases, a single sound contains several statuses. The size of the respective status is not fixed like the frame. A status usually includes several or tens of frames.

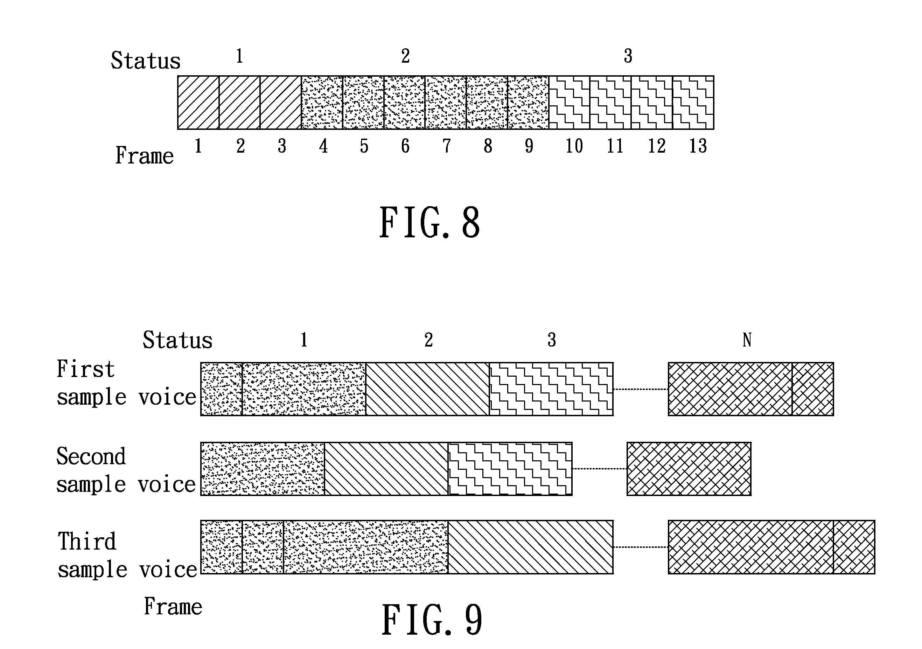

As illustrated in FIG. 8, the first status includes three frames, the second status includes six frames, and the third status includes four frames.

FIG. 9 is a schematic diagram illustrating initial distribution models of the statuses and the frames of the random voiceprint certification system in accordance with the present invention. For example, three sample voices are equally divided in an initial distribution model.

In the initial model the voices are equally divided for forming frames, the residual frame, if any, is equally divided into two groups and the result is added into each of the first status and the last status. Referring to FIG. 9, three factors must be considered in the distribution model: (1) the first frame must belong to the first status, (2) the last frame must belong to the last status, and (3) the status in the frame either remains unchanged or the change of the status in the frame continues to the next one. Gauss distribution possibility is employed to calculate the possibility of each frame of each state, and Viterbi algorithm is employed to obtain the most similar path.

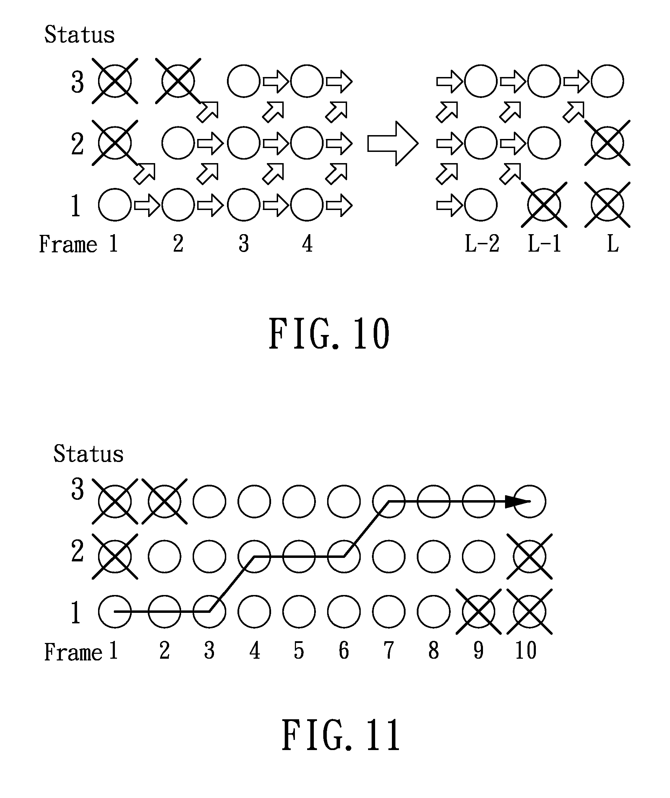

FIG. 10 is a schematic diagram illustrating status conversion of the random voiceprint certification system in accordance with the present invention.

FIG. 10 shows the possible conversion of the statuses of frames (the number of which is L) when three statuses are involved. The crossed frame is deemed as an impossible status, and the directions indicated by the arrows are the possible paths of the change of the statuses.

FIG. 11 is a schematic diagram illustrating a most similar path of the random voiceprint certification system in accordance with the present invention.

As illustrated in FIG. 11, in retrieving features, the most similar path includes a first status having the first, the second, and the third frames, a second status having the fourth, the fifth, and the sixth frames, and a third status having the seventh, the eight, the ninth, and the tenth frames.

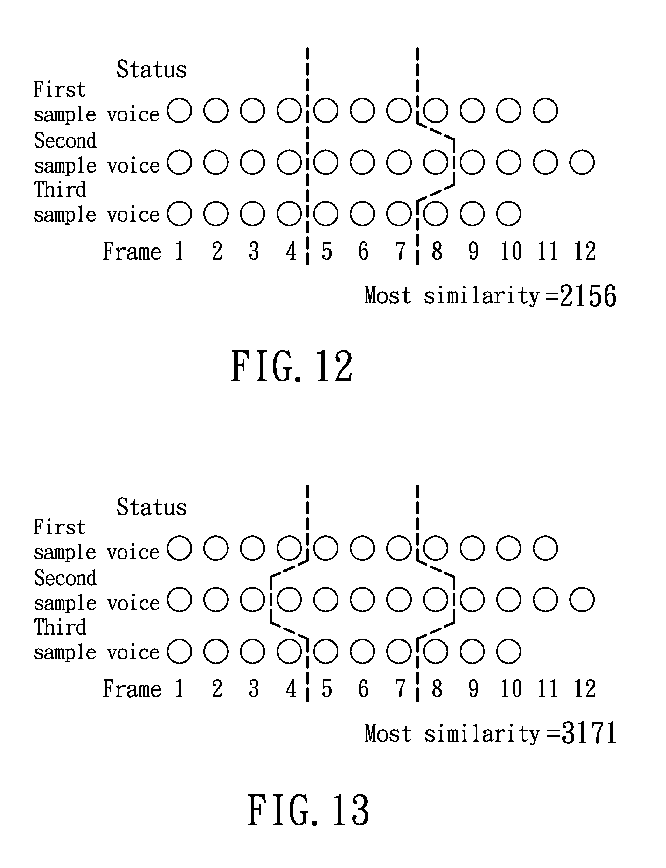

FIG. 12 is a schematic diagram illustrating division of the frames of the random voiceprint certification system in accordance with the present invention.

FIG. 12 shows initial models of three statuses of three sample voices, which are distributions after equal division. The first sample voice is divided equally into three statuses each having three frames, and the residual two frames are divided equally and added into the first status and the second status respectively. The second sample voice is divided equally into three statuses each having four frames. The third sample voice is divided into three statuses each having three frames, and one residual frame is added into the first status. After calculation, the possibility of most similarity is 2156.

FIG. 13 is a schematic diagram illustrating a first redistribution of the frames of the random voiceprint certification system in accordance with the present invention. As illustrated in FIG. 13, the possibility of most similarity has an increase to reach 3171 after the first redistribution.

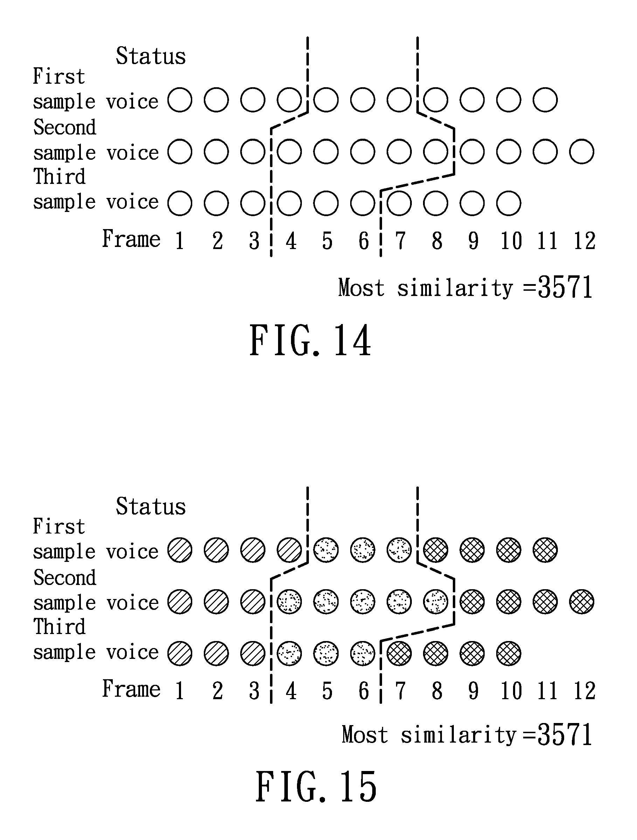

FIG. 14 is a schematic diagram illustrating a second redistribution of the frames of the random voiceprint certification system in accordance with the present invention. As illustrated in FIG. 14, the possibility most similarity has increase to reach 3571 after the second redistribution.

FIG. 15 is a schematic diagram illustrating an optimal distribution of the frames of the random voiceprint certification system in accordance with the present invention. As illustrated in FIG. 15, the possibility of most similarity cannot be raised after the third distribution. Thus, it can be deemed as the most optimal frame distribution. The expectation value and the variance of each status are calculated to obtain the model parameters that can be stored in the database.

Referring back to FIG. 2, when entering the training system 10 for proceeding with the voice training operation, equations (1)-(9) are used to obtain the effective training voice features. Viterbi algorithm is then employed to obtain the most similar path. Next, the expectation value and variance of each status are calculated to obtain the appointment voiceprint feature model parameter groups, thereby completing the voice training operation. The training for a user will be ended and rejected if the possibility of the most similarity is smaller than a predetermined threshold. Accordingly, a new training of the random voiceprint certification system 1 is required. Conversely, the training for a user will be approved and ended when the possibility of the most similarity is greater than the predetermined threshold. Hence, the appointment voiceprint feature model parameter groups are stored in the random voiceprint certification system 1.

Still referring to FIG. 1 and FIG. 3A, next, the random voiceprint cipher lock and creating method therefor of the present invention process the procedure of generating the random voiceprint cipher lock S3. In the procedure of generating the random voiceprint cipher lock S3, the random cipher generator 20 randomly generates one or several sets of the reference voiceprint lock from the appointment voiceprint feature model parameter groups. The random voiceprint certification system completes setting up and forms the random voiceprint cipher lock. After completing the procedure of generating the random voiceprint cipher lock S3, the random voiceprint cipher lock can provide the testing system 30 to carry out the voice testing operation.

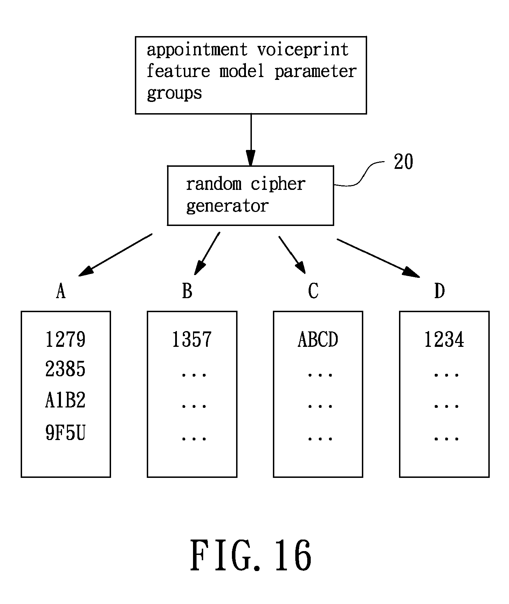

Referring to FIG. 16, for example, the random cipher generator 20 can generate four columns of the reference voiceprint passwords. The column A of the reference voiceprint passwords includes 1279, 2385, A1B2, 9F5U...etc.; the column B of the reference voiceprint passwords includes 1357...etc.; the column C of the reference voiceprint passwords includes ABCD...etc.; and the column D of the reference voiceprint passwords includes 1234...etc. The random voiceprint certification system 1 processes the voice testing operation according to the selection of the reference voiceprint passwords by the random cipher generator.

Still referring to FIG. 2, following, the possibility of similarity between the testing voice features and the reference voiceprint passwords are calculated to obtain the verification result. In voice verification, when the possibility of least similarity is greater than a predetermined threshold, the user can pass the testing and enter the random voiceprint certification system 1. Conversely, when the possibility of least similarity is smaller than the predetermined threshold, the testing of the user is failed and ended to exit the random voiceprint certification system 1.

Comparing to TWN 490655, only one reference sample is set up so that it is easy for illegal invasion. On the contrary, the random voiceprint certification system 1 of the present invention has the random cipher generator 20 to randomly generate one or several reference voiceprint passwords. Therefore, the random voiceprint certification system 1 completes setting and forms the random voiceprint cipher lock. The effect of preventing easy illegal invasion can be achieved.

Although the invention has been described in detail with reference to its presently preferred embodiment, it will be understood by one of ordinary skill in the art that various modifications can be made without departing from the spirit and the scope of the invention, as set forth in the appended claims.

**Claims**

**1.** A random voiceprint certification system, comprising:

A training system receiving input raw voice data to generate appointment voiceprint feature model parameter groups from the input raw voice data;

A random cipher generator randomly generating at least one reference voiceprint password by the appointment voiceprint feature model parameter groups to build a random voiceprint cipher lock; and

A testing system processing a voice testing operation by the random voiceprint cipher lock.

2. The random voiceprint certification system as defined in claim 1, wherein, further comprises a front-end processing portion and a feature-retrieving portion in processing the voice training operation, the training system retrieves the effective testing voice data from the input raw voice data by the front-end processing portion, further retrieves the effective testing voice features from the effective training voice data by the feature-retrieving portion, the effective training voice data is calculated to obtain a most similar path as the appointment voiceprint feature model parameter groups.

3. The random voiceprint certification system as defined in claim 1, wherein, further comprises a front-end processing portion and a feature-retrieving portion, in processing the voice testing operation, the testing system retrieves the effective testing voice data from the input raw voice data by the front-end processing portion, further retrieves the effective testing voice features from the effective testing voice data by the feature-retrieving portion, and finally outputs a verification result of a calculation of the possibility of most similarity between the testing voice features and model parameters in the appointment voiceprint feature model parameter groups.

4. A random voiceprint cipher lock comprising:

a plurality of voiceprint characteristic units obtained from a input raw voice data; and
a reference voiceprint password formed by the randomly combining the voiceprint characteristic units to build a random voiceprint cipher lock,

wherein, in a decrypting operation, testing voice data required by the random voiceprint cipher lock corresponds to the reference voiceprint password to complete a voice testing operation.

5. The random voiceprint cipher lock as defined in claim 4, wherein the input raw voice data generates appointment voiceprint feature model parameter groups, and the voiceprint characteristic units are obtained from the appointment voiceprint feature model parameter groups.

6. A creating method of random voiceprint cipher lock comprises:

inputting an input raw voice data;
retrieving a plurality of voiceprint characteristic units from the input raw
voice data; and forming at least one reference voiceprint password by combining at
least one the voiceprint characteristic unit to provide a random voiceprint
cipher lock.

7. The creating method of random voiceprint cipher lock as defined in claim 6, in obtainment of the voiceprint characteristic units, further obtaining appointment voiceprint feature model parameter groups from the input raw voice data and then obtaining the voiceprint characteristic units from the appointment voiceprint feature model parameter groups.

8. The creating method of random voiceprint cipher lock as defined in claim 6, wherein the voiceprint characteristic units are obtained by a training system.

9. The creating method of random voiceprint cipher lock as defined in claim 6, wherein the at least one reference voiceprint password is obtained by a random cipher generator.

```
┌─────────────────────────┐
│       input raw         │ ── S1
│      voice data         │
└─────────────────────────┘
            │
            ▼
┌─────────────────────────┐
│  appointment voiceprint │ ── S2
│  feature model parameter│
│  groups                 │
└─────────────────────────┘
            │
            ▼
┌─────────────────────────┐
│  reference voiceprint   │ ── S3
│  password               │
└─────────────────────────┘
```

FIG. 1

FIG. 2

```
                                                            No
registering        A/D              voice
voice data   →   converter   →     detector
                                             Yes

     front-end         feature-retrieving      training
  →  processing    →   portion            →    system
     portion
                                                      10
```

FIG. 3A

random cipher generator — 20

↓

registering voice data

↓

A/D converter

↓

voice detector

No →

Yes ↓

front-end processing portion

↓

feature-retrieving portion

↓

testing system — 30

FIG. 3B

13

FIG. 4A

endpoint

FIG. 4B

FIG. 5A

FIG. 5B

FIG. 6A

FIG. 6B

FIG. 6C

Input raw voice data

Input raw voice data after the completion
of cutting point operation

FIG. 7

EP 2 120 232 A1

## FIG. 9

Frame

Third sample voice

Second sample voice

First sample voice

Status   1   2   3   N

## FIG. 8

Frame   1  2  3  4  5  6  7  8  9  10  11  12  13

Status   1   2   3

FIG. 10

FIG. 11

Status

First sample voice ○ ○ ○ ○ ○ ○ ○ ○ ○ ○ ○

Second sample voice ○ ○ ○ ○ ○ ○ ○ ○ ○ ○ ○ ○

Third sample voice ○ ○ ○ ○ ○ ○ ○ ○ ○ ○

Frame 1  2  3  4  5  6  7  8  9  10  11  12

Most similarity =2156

FIG. 12

Status

First sample voice ○ ○ ○ ○ ○ ○ ○ ○ ○ ○ ○

Second sample voice ○ ○ ○ ○ ○ ○ ○ ○ ○ ○ ○ ○

Third sample voice ○ ○ ○ ○ ○ ○ ○ ○ ○ ○

Frame 1  2  3  4  5  6  7  8  9  10  11  12

Most similarity =3171

FIG. 13

FIG. 14

Most similarity =3571

FIG. 15

Most similarity =3571

```
┌────────────────────────┐
│ appointment voiceprint │
│ feature model parameter│
│ groups                 │
└────────────────────────┘
            │
            ▼
        ┌──────────────────┐        20
        │ random cipher    │ ⌒
        │ generator        │
        └──────────────────┘
       ╱      │      │      ╲
      ▼       ▼      ▼       ▼
      A       B      C       D

┌────────┐ ┌────────┐ ┌────────┐ ┌────────┐
│  1279  │ │  1357  │ │  ABCD  │ │  1234  │
│  2385  │ │  ...   │ │  ...   │ │  ...   │
│  A1B2  │ │  ...   │ │  ...   │ │  ...   │
│  9F5U  │ │  ...   │ │  ...   │ │  ...   │
└────────┘ └────────┘ └────────┘ └────────┘
```

FIG. 16

# INTERNATIONAL SEARCH REPORT

| | International application No. |
|---|---|
| | PCT/CN2007/071200 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC:G10L17/00,H04L9/32,G06F1/00,G07F7/10

Documentation searched other than minimum documentation to the extent that such documents are included in the fields searched

Electronic data base consulted during the international search (name of data base and, where practicable, search terms used)

CPRS,CNKI,WPI,EPODOC,PAJ: VOICE PRINT VOCAL SOUND GROOVE RANDOM+ STOCHASTIC

**C. DOCUMENTS CONSIDERED TO BE RELEVANT**

| Category* | Citation of document, with indication, where appropriate, of the relevant passages | Relevant to claim No. |
|---|---|---|
| X | CN1610294A(ARUZE CORP) 27 Apr.2005（27.04.2005）claims 1-14, page 2 line 20 to page 21 line 11 of the description | 1—9 |
| X | US5995927A(LUCENT TECHNOLOGIES INC) 30 Nov.1999（30.11.1999）column 2 line 35 to column 9 line 35 of the description, claims 1-24 | 1—9 |
| A | US20020104027A1 (SKERPAC V) 01 Aug.2002（01.08.2002）the whole document | 1—9 |
| A | CN1808567A(TAN, Wenhua) 26 Jul.2006（26.07.2006）the whole document | 1—9 |

☐ Further documents are listed in the continuation of Box C. ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 03 Mar.2008（03.03.2008） | **13 Mar. 2008 (13.03.2008)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | YANG, Yanlan Telephone No. (86-10)62085705 |

Form PCT/ISA/210 (second sheet) (April 2007)

## INTERNATIONAL SEARCH REPORT
Information on patent family members

International application No.

PCT/CN2007/071200

| Patent Documents referred in the Report | Publication Date | Patent Family | Publication Date |
|---|---|---|---|
| CN1610294A | 27.04.2005 | ZA200408587A | 26.04.2005 |
| | | EP1526505A | 27.04.2005 |
| | | US2005089172A | 28.04.2005 |
| | | AU2004222842A | 12.05.2005 |
| | | JP2005128307A | 19.05.2005 |
| | | AT349752T | 15.01.2007 |
| | | DE602004003878T | 12.04.2007 |
| | | ES2278259T | 01.08.2007 |
| US5995927A | 30.11.1999 | EP0874354A | 28.10.1998 |
| | | JP10307593A | 17.11.1998 |
| | | JP3630216B2 | 16.03.2005 |
| | | DE69800006D | 29.07.1999 |
| | | DE69800006T | 06.07.2000 |
| US20020104027A | 01.08.2002 | none | |
| CN1808567A | 26.07.2006 | none | |

Form PCT/ISA/210 (patent family annex) (April 2007)

## INTERNATIONAL SEARCH REPORT

| International application No. |
| --- |
| PCT/CN2007/071200 |

A.  CLASSIFICATION OF SUBJECT MATTER

G10L17/00     (2006.01) i

H04L9/32      (2006.01) i

G06F21/00     (2006.01)i

G07F7/10      (2006.01) i

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 490655